# EUROPEAN PATENT SPECIFICATION

(11) **EP 3 565 045 B1**
(45) Date of publication and mention of the grant of the patent: **06.09.2023**
(21) Application number: 17888640.4
(22) Date of filing: 28.12.2017
(51) Int. Cl.: H01M 8/0612, H01M 8/0668, C01B 3/38, C01B 3/48, C01B 3/58, B01J 8/04

(54) **FUEL PROCESSING DEVICE**
KRAFTSTOFFVERARBEITUNGSVORRICHTUNG
DISPOSITIF DE TRAITEMENT DE CARBURANT

(30) Priority: 30.12.2016 KR 20160183329
(43) Date of publication of application: 06.11.2019
(73) Proprietor: Doosan Corporation, Seoul 04563 (KR)
(72) Inventor: CHOI, Myoung Hoon, Hwaseong-si Gyeonggi-do 18599 (KR)
(74) Representative: Stöckeler, Ferdinand
(86) International application number: PCT/KR2017/015683
(87) International publication number: WO 2018/124787

(56) References cited:
- JP-A- 2007 055 868
- JP-A- 2007 055 868
- KR-A- 20040 034 026
- KR-A- 20100 065 564
- KR-A- 20120 084 062
- KR-B1- 100 837 679
- KR-Y1- 200 266 785
- US-A1- 2004 068 933
- US-A1- 2004 144 029
- US-A1- 2010 202 938

## Description

### [Technical Field]

The present disclosure relates to a fuel processing apparatus, and more particularly, to a fuel processing apparatus, which is advantageous to enhance the heat transfer and the cooling efficiency through the optimal placement, stably perform the reforming reaction and the CO removing reaction, and miniaturize the apparatus.

### [Background Art]

Generally, a fuel processing apparatus used in a fuel cell system may be configured to include a reformer, a CO shift converter, and a CO remover.

The reformer reacts the fuel gas such as methane with steam to generate hydrogen through the endothermic reaction through a burner. Herein, the hydrogen generated in the reformer usually contains carbon monoxide.

When the hydrogen containing such carbon monoxide is supplied to the fuel cell system as it is, poisoning may occur in the reaction catalyst inside a fuel cell, thereby deteriorating the performance of the fuel cell.

Therefore, it is necessary to remove carbon monoxide before supplying the generated hydrogen to the fuel cell system, and at this time, the CO shift converter and the CO remover are used.

The CO shift converter reacts carbon monoxide with steam to convert carbon monoxide into carbon dioxide, and additionally generates hydrogen. While passing through the CO shift converter, carbon monoxide contained in hydrogen is reduced from 10 ~ 15% to 1% or less.

Hydrogen having passed through the CO shift converter flows into the CO remover again, and converts carbon monoxide into carbon dioxide through the selective oxidation reaction with respect to carbon monoxide to be usually reduced to 10 ppm or less.

As described above, the fuel gas from which the CO has been removed is supplied to an anode of a fuel cell stack, and air (oxygen) is supplied to a cathode, such that the electrochemical reaction is performed through an electrolyte membrane to generate a current, and additionally, water and heat are generated.

The generated current is collected through a current collector and converted into an alternating current in an inverter to be supplied to a load, and the generated heat is stored as hot water through a heat exchanger to be also used for hot water supply and heating.

Currently, fuel cells are being used for a wider range of applications, and advanced countries are continuously investing to improve the fuel cells and enhance the efficiency.

KOREA also regards the fuel cell as a future eco-friendly energy source, and is actively investing in it.

Therefore, it is continuously seeking to enhance the performance of the fuel processing apparatus for efficiently generating hydrogen, which is the main material of the fuel cell in the related technical field. The research has been continued to further miniaturize the apparatus, to enhance the thermal efficiency by recovering the waste heat of the exhaust gas between the reformer, the CO shift converter, and the CO remover internally disposed in the apparatus, and to enhance the cooling capability by the heat transfer therebetween.

JP 2007-055868 A describes a fuel reforming device equipped with a desulfurizer capable of quickly starting in a short time and also capable of performing a stable desulfuring operation with a high thermal efficiency at the time of a normal operation. In a device provided with a steam reformer, the desulfurizer, a CO converter and a CO remover, a city gas introduced in order to desulfurize is heated and efficiently desulfurized by incorporating a heat transfer means for heating a first desulfurization layer between the wall surface of the first desulfurization layer of the desulfurizer and an upper end surface of a combustion exhaust gas circulation tube and also by introducing a steam reformed gas reformed at the steam reformer into the inside of the desulfurizer and circulating along the wall surface of the first desulfurization layer and a second desulfurization layer.

US 2004/144029 A1 describes a cylindrical steam reforming unit comprising a plurality of cylindrical bodies consisting of a first cylindrical body, a second cylindrical body and a third cylindrical body of successively increasing diameters disposed in a concentric spaced relation, a radiation cylinder disposed within and concentrically with the first cylindrical body, a burner disposed in the radial central portion of the radiation cylinder, and a reforming catalyst layer with a reforming catalyst filled in a gap between the first and second cylindrical bodies, wherein a CO shift catalyst layer and a CO removal catalyst layer are disposed in a gap between the second and third cylindrical bodies, the CO shift catalyst layer being formed in a gap with the direction of flow reversed at one axial end of the reforming catalyst layer and through a heat recovery layer of predetermined length. According to this reforming unit, without internally disposing a heat insulation layer, a cooling mechanism or the like, the reforming catalyst layer, CO shift catalyst layer, and CO removal catalyst layer can be integrated, achieving various useful effects, including size and weight reductions and the shortening of startup time.

### [DISCLOSURE]

### [Technical Problem]

The present disclosure is intended to solve the above problem, and an object of the present disclosure is to provide to a fuel processing apparatus, which is advantageous to enhance the heat transfer and the cooling efficiency through the optimal placement, stably perform the reforming reaction and the CO removing reaction, and miniaturize the apparatus.

This object is achieved by a fuel processing apparatus according to claim 1. Further embodiments are disclosed in dependent claims 2 to 11.

### [Technical Solution]

The present disclosure for achieving the objects relates to a fuel processing apparatus, and may include an apparatus body, a fuel reforming part disposed at the central portion of the apparatus body, a heating part disposed at the upper portion of the apparatus body so as to heat the fuel reforming part, a CO shift-converting reaction part connected with the fuel reforming part, and disposed at the lower portion of the apparatus body, and a PROX reaction part connected with the CO shift-converting reaction part, and disposed at the upper portion of the apparatus body.

The fuel reforming part includes a fuel gas inlet disposed to be connected with the lower end of the apparatus body, a first passage connected with the fuel gas inlet, and disposed inside the apparatus body so that the inflow fuel gas is moved upwards, a reforming catalyst layer connected with the first passage, and disposed at the inner central portion of the apparatus body, and a second passage connected with the reforming catalyst layer, disposed at the inside of the first passage, and provided so that the fuel gas having passed through the reforming catalyst reaction is moved downwards. The heating part includes a center burner disposed at the upper central portion of the apparatus body, a heat dispersing plate disposed at the upper end of the reforming catalyst layer at the lower portion of the burner, and an exhaust gas passage disposed along the outer circumference of the fuel reforming part at the inside of the apparatus body. The heating part further includes a side burner disposed along the circumference of the center burner.

In addition, in an embodiment of the present disclosure, the CO shift-converting reaction part may include a CO shift-converting catalyst layer disposed along the outer circumference of the fuel reforming part at the lower portion of the apparatus body, a third passage disposed at the lower end of the apparatus body, and for connecting the second passage with the CO shift-converting catalyst layer, and a fourth passage for connecting the CO shift-converting catalyst layer with the PROX reaction part at the outside of the apparatus body, and provided so that the fuel gas having passed through the CO shift-converting catalyst reaction flows to the PROX reaction part.

In addition, in an embodiment of the present disclosure, the PROX reaction part may include a CO removal catalyst layer disposed along the outer circumference of the heating part at the upper portion of the apparatus body, a PROX inlet disposed at one side of the CO removal catalyst layer, and connected with the fourth passage, and a PROX outlet disposed at the other side of the CO removal catalyst layer, and for discharging the fuel gas having passed through the CO removal catalyst reaction.

In addition, in an embodiment of the present disclosure, the heat dispersing plate may have a hemispherical shape protruded toward the center burner, and the side burner may be disposed to be perpendicular to the surface of the heat dispersing plate.

In addition, in an embodiment of the present disclosure, the fuel processing apparatus may further include a first heat-exchanging part connected with the heating part, and disposed between the heating part and the CO shift-converting reaction part so as to be heat-exchanged between the exhaust gas discharged from the heating part and the CO shift-converting reaction part.

In addition, in an embodiment of the present disclosure, the first heat-exchanging part may include a first heat-exchanging body disposed along the outer circumference of the exhaust gas passage, and connected with the exhaust gas passage, and a first heat transfer pipe disposed to be wound in plural along the inner circumference of the first heat-exchanging body, and through which heat transfer fluid flows, and heat may be exchanged between the exhaust gas flowing through the first heat-exchanging body and the heat transfer fluid flowing through the first heat transfer pipe.

In addition, in an embodiment of the present disclosure, the fuel processing apparatus may further include a PROX cooling part disposed along the inner circumference of the PROX reaction part so as to cool the PROX reaction part.

In addition, in an embodiment of the present disclosure, the PROX cooling part may include a cooler disposed along the inner circumference of the CO removal catalyst layer, a cooling fluid inlet disposed at one side of the cooler, and into which the heat transfer fluid flows, and a cooling fluid outlet disposed at the other side of the cooler, and out which the heat transfer fluid flows.

In addition, in an embodiment of the present disclosure, the fuel processing apparatus may further include a second heat-exchanging part connected between the PROX cooling part and the first heat-exchanging part so as to be heat-exchanged between the exhaust gas and the heat transfer fluid.

In addition, in an embodiment of the present disclosure, the second heat-exchanging part may include a second heat-exchanging body disposed along the outer circumference of the first heat-exchanging body, and having an inflow hole into which the heat transfer fluid flows and an outflow hole out which the heat transfer fluid flows, and a second heat transfer pipe disposed at the second heat-exchanging body, connected with the first heat-exchanging body, and through which the exhaust gas flows.

In addition, in an embodiment of the present disclosure, the outflow hole of the second heat-exchanging body may be configured to be connected with the cooling fluid inlet.

In addition, in an embodiment of the present disclosure, the cooling fluid outlet may be configured to be connected with the fuel gas inlet.

### [Advantageous Effects]

According to the present disclosure, it is possible to enhance the heat transfer by the recovery of the waste heat of the exhaust gas and the cooling efficiency of the catalyst layer in which the exothermic reaction is performed through the optimal placement of the fuel reforming part, the CO shift-converting reaction part, and the PROX reaction part.

This makes it possible to stably perform the reforming reaction and the CO removing reaction with respect to the fuel used in the fuel cell inside the apparatus, and to ultimately enhance the performance of the apparatus.

In addition, it is possible to miniaturize the apparatus through the optimal placement.

### [Description of Drawings]

FIG. 1 is a perspective diagram of a fuel processing apparatus according to the present disclosure. Unlike the present invention, the fuel processor of Fig. 1 does not enclose any side burner disposed along the circumference of the center burner.
FIG. 2 is a front cross-sectional diagram taken along the line A-A' according to the disclosure illustrated in FIG. 1.
FIG. 3 is a diagram illustrating the flow of the fuel gas in the disclosure illustrated in FIG. 2.
FIG. 4 is a diagram illustrating the flow of the exhaust gas in the disclosure illustrated in FIG. 2.
FIG. 5 is a diagram illustrating the flow of a heat transfer fluid in the disclosure illustrated in FIG. 2.
FIGS. 6 and 7 are diagrams illustrating a form of a burner in accordance with the present invention in the present disclosure.
FIG. 8 is a diagram illustrating another form of the burner in the present disclosure.

### [Best Mode]

Hereinafter, preferred embodiments of a fuel processing apparatus according to the present disclosure will be described in detail with reference to the accompanying drawings.

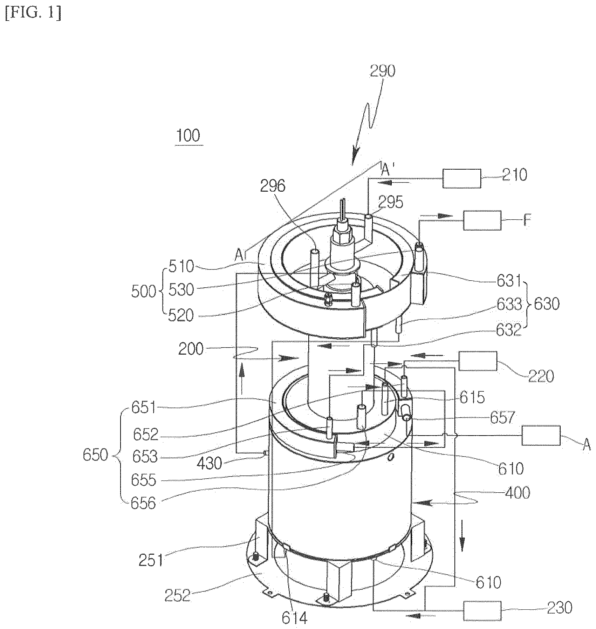

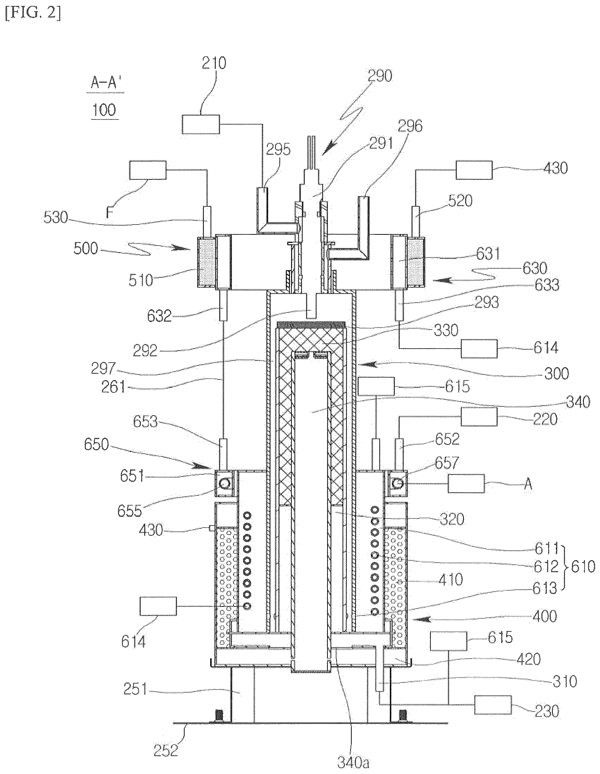

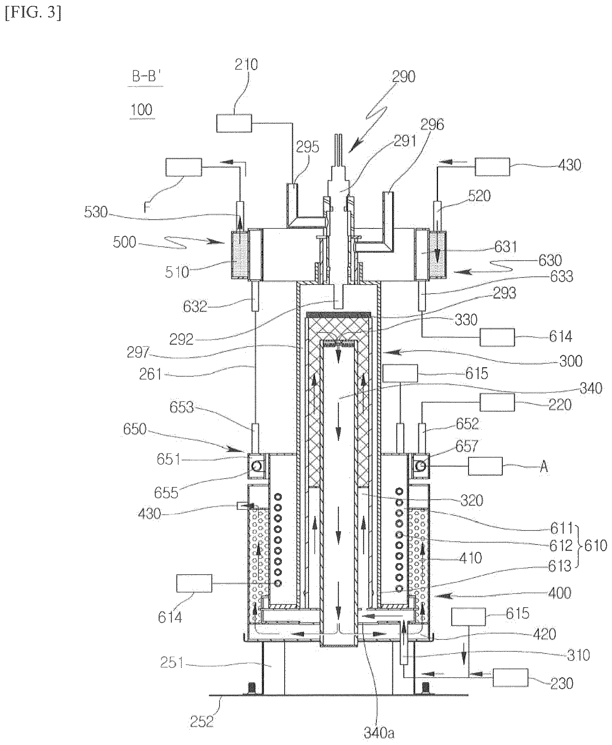

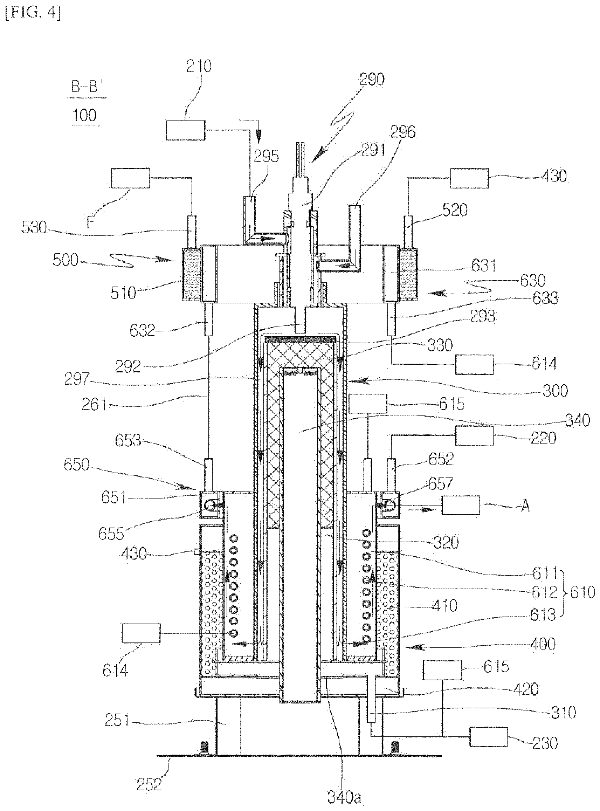

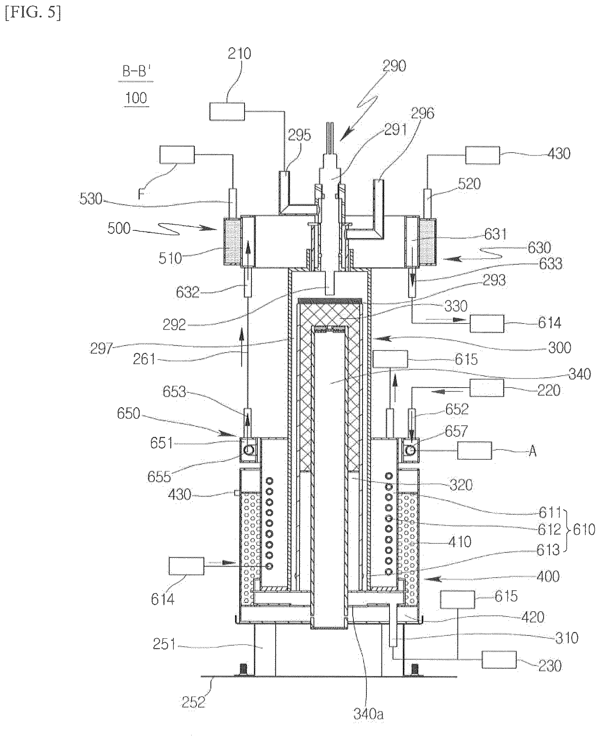

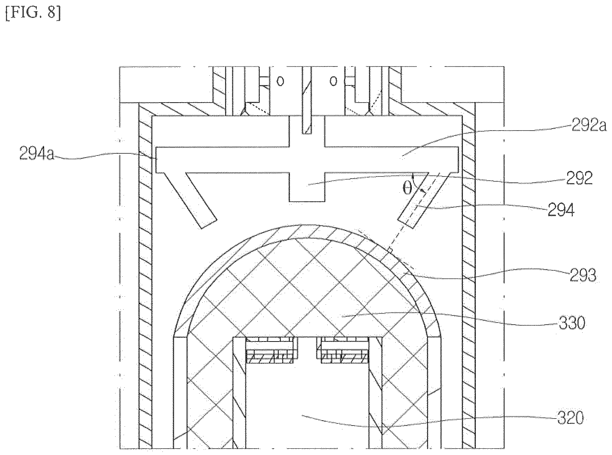

FIG. 1 is a perspective diagram of a fuel processing apparatus according to the present disclosure (see above), FIG. 2 is a front cross-sectional diagram taken along the line A-A' according to the disclosure illustrated in FIG. 1, FIG. 3 is a diagram illustrating the flow of the fuel gas in the disclosure illustrated in FIG. 2, FIG. 4 is a diagram illustrating the flow of the exhaust gas in the disclosure illustrated in FIG. 2, FIG. 5 is a diagram illustrating the flow of a heat transfer fluid in the disclosure illustrated in FIG. 2, FIGS. 6 and 7 are diagrams illustrating another form of a burner in the present disclosure, and FIG. 8 is a diagram illustrating still another form of the burner in the present disclosure.

To facilitate understanding of the flow of the fuel gas, the heat transfer fluid, and the exhaust gas in the figure, the placement position of an inlet or an outlet may be changed slightly. However, since the enhancement of the thermal efficiency and the cooling capability through the flow is an important feature of the present disclosure, it may be considered that the placement position is changed within a range that may be obviously recognized by those skilled in the art.

Referring to FIGS. 1 to 5, an embodiment of a fuel processing apparatus 100 according to the present disclosure is configured to include an apparatus body 200, a fuel reforming part 300, a heating part 290, a CO shift-converting reaction part 400, a PROX reaction part 500, a first heat-exchanging part 610, a second heat-exchanging part 650, and a PROX cooling part 630.

Firstly, the apparatus body 200 may be generally implemented in a cylindrical shape, and made of a material having high heat resistance and high rigidity capable of withstanding high heat and impact. In addition, the lower end of the apparatus body 200 may be provided with a foot plate 252 having a disc shape and a plurality of support beams 251 connected with the foot plate 252 and for supporting the apparatus body 200 so that the apparatus body 200 may be stably supported.

Next, referring to FIG. 2, the fuel reforming part 300 is disposed in a space separately defined inside the central portion of the apparatus body 200.

The fuel reforming part 300 is configured to include a fuel gas inlet 310, a first passage 320, a reforming catalyst layer 330, and a second passage 340.

The fuel gas inlet 310 is disposed to be connected with the lower end of the apparatus body 200, and the first passage 320 is connected with the fuel gas inlet 310, and disposed inside the apparatus body 200 so that the inflow fuel gas is moved upwards.

The reforming catalyst layer 330 is connected with the first passage 320 and disposed at the inner central portion of the apparatus body 200, and the second passage 340 is connected with the reforming catalyst layer 330, disposed at the inside of the first passage 320, and provided so that the fuel gas having passed through the reforming catalyst layer 330 is moved downwards.

The reforming catalyst layer 330 generates the reformed gas (one form among the fuel gases) in which hydrogen and carbon monoxide have been mixed by the hydrocarbon-steam reforming reaction (endothermic reaction; suitable catalytic reaction temperature: 400 to 650°C).

A concept of the reformed gas is the gas having passed through the reforming reaction among the fuel gases, contains hydrogen and carbon monoxide, and refers to the fuel gas before entering the CO shift-converting catalyst layer 410 that will be described below.

A basic chemical reaction formula is the same as CH₄ + H₂O → CO + 3Hz. Of course, each apparatus may be slightly different from each other, but it may be applied by inferring within a range that is obvious to those skilled in the art. That is, when methane and water are mixed to flow into the reforming catalyst layer 330, the chemical reaction is performed in the catalyst layer of the fuel reforming part 300 to generate hydrogen and carbon monoxide.

The flow of the fuel gas on the fuel processing apparatus 100 will be described in detail with reference to FIG. 3.

Next, the CO shift-converting reaction part 400 is connected with the fuel reforming part 300, and disposed at the lower portion of the apparatus body 200. The CO shift-converting reaction part 400 may be configured to include a CO shift-converting catalyst layer 410, a third passage 420, and a fourth passage 430.

The CO shift-converting catalyst layer 410 may be disposed along the outer circumference of the fuel reforming part 300 at the lower portion of the apparatus body 200, and the third passage 420 may be disposed at the lower end of the apparatus body 200 and provided to connect the second passage 340 with the CO shift-converting catalyst layer 410.

The fourth passage 430 may connect the CO shift-converting catalyst layer 410 with the PROX reaction part 500 at the outside of the apparatus body 200, and may be provided so that the fuel gas having passed through the CO shift-converting catalyst reaction flow to the PROX reaction part 500.

The CO shift-converting catalyst layer 410 converts the carbon monoxide of the reformed gas generated in the reforming catalyst layer 330 into carbon dioxide through the CO shift-converting reaction (exothermic reaction; suitable catalytic reaction temperature: 1 to 250 °C), thereby reducing a carbon monoxide ratio in the fuel gas.

A chemical reaction formula is the same as CO + H₂O → H₂ + CO₂. Of course, each apparatus may be slightly different from each other, but it may be applied by inferring within a range that is obvious to those skilled in the art.

That is, carbon monoxide reacts with water and additionally generates hydrogen, and carbon monoxide is shift-converted into carbon dioxide through the oxidation reaction.

Next, the PROX reaction part 500 is connected with the CO shift-converting reaction part 400, and disposed at the upper portion of the apparatus body 200. The PROX reaction part 500 may be configured to include a CO removal catalyst layer 510, a PROX inlet 520, and a PROX outlet 530.

The CO removal catalyst layer 510 may be disposed along the outer circumference of the heating part 290 at the upper portion of the apparatus body 200, and the PROX inlet 520 may be disposed at one side of the CO removal catalyst layer 510, and connected with the fourth passage 430. In addition, the PROX outlet 530 may be disposed at the other side of the CO removal catalyst layer 510, and provided to discharge the fuel gas having passed through the CO removal catalyst reaction.

The CO removal catalyst layer 510 converts the carbon monoxide of the fuel gas generated in the CO shift-converting catalyst layer 410 into carbon dioxide through the carbon monoxide selective oxidation reaction (preferential oxidation reaction (PROX), exothermic reaction, suitable catalytic reaction temperature: 80 to 160°C), thereby further reducing the ratio of carbon monoxide in the fuel gas. At this time, the target content of carbon monoxide is equal to or smaller than 10 ppm in the fuel gas.

A chemical reaction formula is the same as 2CO + O₂ → 2CO₂. Of course, each apparatus may be slightly different from each other, but it may be applied by inferring within a range that is obvious to those skilled in the art.

That is, carbon monoxide reacts with oxygen to be converted into carbon dioxide, and the carbon monoxide in the fuel gas is removed.

Details of the fuel gas flow in the fuel reforming part 300, the CO shift-converting reaction part 400, and the PROX reaction part 500 will be described with reference to FIG. 3.

Next, referring to FIG. 2, the heating part 290 is disposed at the upper portion of the apparatus body 200 so as to heat the fuel reforming part 300. The heating part 290 is configured to include a center burner 292 connected to the lower end of a burner body 291, a heat dispersing plate 293, and an exhaust gas passage 297.
Unlike the present invention, the fuel processor of Fig. 2 does not enclose any side burner disposed along the circumference of the center burner.

The center burner 292 is disposed at the upper central portion of the apparatus body 200, and the heat dispersing plate 293 may be disposed at the upper end of the fuel reforming part 300 at the lower portion of the burner. Then, the exhaust gas passage 297 may be disposed along the outer circumference of the fuel reforming part 300 inside the apparatus body 200.

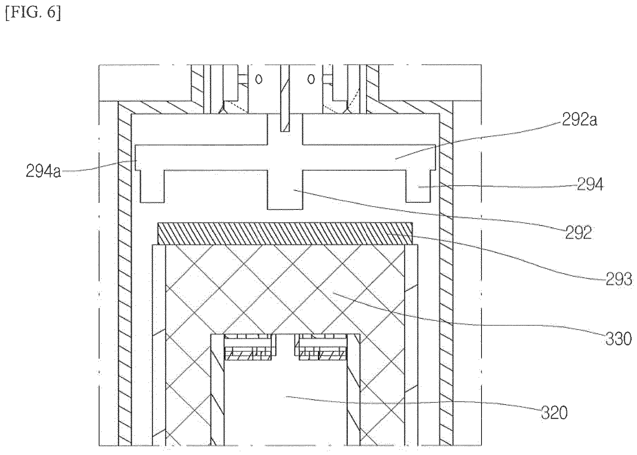

Meanwhile, FIGS. 6 to 8 illustrate a form of the heating part 290 in accordance with the present invention.

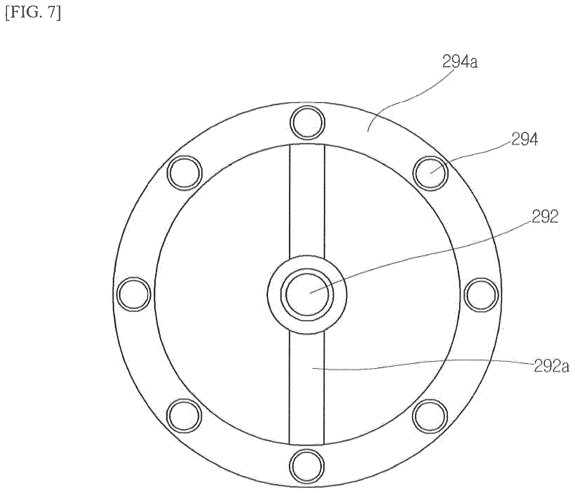

Firstly, referring to FIGS. 6 and 7, a side burner 294 is additionally disposed along the circumference of the center burner 292.

The side burner 294 may be disposed on a side pipe 294a having a ring shape formed integrally with a connection pipe 292a connected with the center burner 292. Therefore, the side burner 294 may be radially disposed in plural.

Through this placement, the heat dispersing plate 293 may be simultaneously heated by the side burner 294 as well as the center burner 292, thereby heating the reforming catalyst layer 330 more uniformly.

Next, referring to FIG. 8, it may be seen that the side burner 294 has been disposed on the side pipe 294a with the angle θ formed in the direction of the heat dispersing plate 293. At this time, the heat dispersing plate 293 may be formed in a hemispherical shape protruded toward the center burner 292. Herein, the angle formed by the side burner 294 may be formed to be perpendicular to the surface of the heat dispersing plate 293.

When the heat dispersing plate 293 is formed in a hemispherical shape, the reforming catalyst layer 330 may receive heat not only at the upper portion thereof but also the side portion thereof, such that it is possible to directly receive heat in a wider region, thereby enabling the heating more uniformly.

Since the side burner 294 is also angularly disposed to be perpendicular to the surface of the heat dispersing plate 293, the energy waste during heating may be minimized.

As described above, the present disclosure may suggest various types of burner structures, and may be applied by inferring within a range that is obvious to those skilled in the art.

Next, the first heat-exchanging part 610 may be connected with the heating part 290, and disposed between the heating part 290 and the CO shift-converting reaction part to be heat-exchanged between the exhaust gas discharged from the heating part 290 and the CO shift-converting reaction part.

The first heat-exchanging part 610 may be configured to include a first heat-exchanging body 611 and a first heat transfer pipe 612.

The first heat-exchanging body 611 may be disposed along the outer circumference of the exhaust gas passage 297, and provided to be connected with the exhaust gas passage 297 through an exhaust gas connection hole 613, and the first heat transfer pipe 612 may be disposed by being wound in plural along the inner circumference of the first heat-exchanging body 611, and provided so that the heat transfer fluid flows.

Herein, the heat transfer fluid may be water. Specifically, it may be Deionized water (DI water) from which the ion component has been removed, and used in a steam state in the present disclosure.

Next, the PROX cooling part 630 may be disposed along the inner circumference of the PROX reaction part 500 so as to cool the PROX reaction part 500. The PROX cooling part 630 may be configured to include a cooler 631, a cooling fluid inlet 632, and a cooling fluid outlet 633.

The cooler 631 may be disposed along the inner circumference of the CO removal catalyst layer 510. The cooling fluid inlet 632 may be disposed at one side of the cooler 631 and a portion into which the heat transfer fluid flows, and the cooling fluid outlet 633 may be disposed at the other side of the cooler 631 and a portion out which the heat transfer fluid flows.

Next, the second heat-exchanging part 650 may be provided to be connected between the PROX cooling part 630 and the first heat-exchanging part 610 so as to be heat-exchanged between the exhaust gas and the heat transfer fluid. The second heat-exchanging part 650 may be configured to include a second heat-exchanging body 651 and a second heat transfer pipe 655.

The second heat-exchanging body 651 may be disposed along the outer circumference of the first heat-exchanging body 611, and provided with an inflow hole into which the heat transfer fluid flows and an outflow hole out which the heat transfer fluid flows. Then, the second heat transfer pipe 655 may be disposed at the second heat-exchanging body 651, connected with the first heat-exchanging body 611, and provided so that the exhaust gas flows.

Meanwhile, the outflow hole of the second heat-exchanging body 651 may be connected with the cooling fluid inlet 632, and the cooling fluid outlet 633 may be connected with the fuel gas inlet 310.

The flow of the heat transfer fluid and the exhaust gas is guided through the connection structure, which will be described in detail with reference to FIGS. 4 and 5.

A configuration of the present disclosure is as described above, and hereinafter, the enhancement of the overall heat efficiency and the cooling performance through the operating method of the present disclosure will be described by reviewing the flow of the fuel gas, the heat transfer fluid, and the exhaust gas.

Firstly, referring to FIG. 3, the flow of the fuel gas in the present disclosure is illustrated.

The fuel is supplied from a fuel supply part 230, and the fuel is heated through the heat-exchange with the exhaust gas in the first heat-exchanging part 610 and mixed with the heat transfer fluid (water in a steam state) flowing out from a first outflow hole 615 to flow to the fuel gas inlet 310 disposed at the lower end of the apparatus body 200. Herein, the fuel is methane, and the fuel gas is in a mixed state of methane and water in the steam state.

The fuel gas flowing into the fuel gas inlet 310 flows into the first passage 320 formed at the central portion of the apparatus body 200. The fuel gas, which has been moved upwards along the first passage 320, reaches the reforming catalyst layer 330.

Hydrogen and carbon monoxide are generated through the reforming reaction in the reforming catalyst layer 330, as in the above chemical reaction formula. At this time, in order to form the suitable reaction temperature of the reforming catalyst layer 330, the heat dispersing plate 293 is heated through the ignition of the center burner 292, and the heat dispersing plate 293 transfers heat to the reforming catalyst layer 330 appropriately, such that the reforming catalyst layer 330 keeps 400 to 650°C that is the suitable reaction temperature.

Now, the fuel gas (reformed gas) having passed through the reforming reaction is collected in the second passage 340 formed at the inside of the first passage 320 to be moved downwards from the apparatus body 200 again.

The third passage 420 is formed horizontally at the lower end of the second passage 340, and the fuel gas moves along the third passage 420 in the outer circumferential direction of the apparatus body 200, and then flows into the CO shift-converting catalyst layer 410.

The carbon monoxide of the fuel gas is further shift-converted into carbon dioxide through the oxidation reaction in the CO shift-converting catalyst layer 410. At this time, heat is supplied from the exhaust gas flowing through the first heat-exchanging body 611 in order to form the suitable reaction temperature. Therefore, 180 to 250 °C that is the suitable reaction temperature is kept.

The fuel gas having passed through the CO shift-converting catalyst layer 410 now flows to the fourth passage 430, and flows into the CO removal catalyst layer 510 through the PROX inlet 520 connected with the fourth passage 430.

The carbon monoxide content in the fuel gas is reduced to 10 ppm or less through the carbon monoxide selective oxidation reaction of the fuel gas in the CO removal catalyst layer 510, and the fuel gas flows into a fuel cell F through the PROX outlet 530 formed at the opposite side after flowing in the circumferential direction thereof.

At this time, in order to form the suitable reaction temperature of the CO removal catalyst layer 510, the CO removal catalyst layer 510 heat-exchanges with the cooler 631 of the PROX cooling part 630 disposed along the outer circumference of the CO removal catalyst layer 510. Since the carbon monoxide selective oxidation reaction is the exothermic reaction, heat is absorbed by the heat transfer fluid flowing through the cooler 631, thereby keeping 80 to 160°C that is the suitable reaction temperature.

Next, referring to FIGS. 4 and 5, the flow of the exhaust gas and the heat transfer fluid in the present disclosure is illustrated.

Firstly, referring to FIG. 4, the flow of the exhaust gas is illustrated, and the heating material (methane + air) through a heating material supplying part 210 is injected into the center burner 292 through a heating material injecting port 295.

Meanwhile, non-reaction exhaust gas is injected from the fuel cell stack through a non-reaction raw material injecting port 296. The non-reaction raw material may be a mixture of hydrogen and other gases, and in the stack, typically 70 to 80% of hydrogen is consumed and 20 to 30% thereof is discharged in a non-reaction state, thereby increasing heating raw material reaction performance by injecting hydrogen therein.

The injected heating raw material and non-reaction raw material are ignited in the center burner 292 to heat the heat dispersing plate 293 and used for forming the suitable reaction temperature of the reforming catalyst layer 330.

The exhaust gas discharged after combustion is moved downwards along the exhaust gas passage 297 formed along the outer circumference of the first passage 320 and then flows into the first heat-exchanging body 611 through the exhaust gas connection hole 613.

The exhaust gas moves upwards inside the first heat-exchanging body 611 and transfers heat to the CO shift-converting catalyst layer 410.

Then, at this time, the first heat transfer pipe 612 provided to be wound in plural in the circumference direction thereof is disposed inside the first heat-exchanging body 611, and the heat transfer fluid flows inside the first heat transfer pipe 612.

The exhaust gas also transfers heat to the heat transfer fluid flowing inside the first heat transfer pipe 612 to heat the heat transfer fluid.

The first heat-exchanging body 611 is connected with a second heat transfer pipe 655 by an exhaust gas connection pipe 656, and the exhaust gas flowing through the first heat-exchanging body 611 flows through the second heat transfer pipe 655, and is discharged into the atmosphere A through an exhaust gas outlet 657.

Of course, the second heat transfer pipe 655 is disposed inside the second heat-exchanging body 651 so that heat may be transferred to the heat transfer fluid injected into the second heat-exchanging body 651 while flowing inside the second heat transfer pipe 655.

Through the above-described structural flow, the exhaust gas not only transfers heat to the heat transfer fluid gradually in the first and second heat-exchanging parts 610, 650, but also transfers heat to the CO shift-converting catalyst layer 410, thereby maximally recycling the waste heat of the exhaust gas.

Next, referring to FIG. 5, the flow of the heat transfer fluid in the present disclosure is illustrated.

Firstly, the heat transfer fluid is supplied through a heat transfer fluid supplying part 220. The heat transfer fluid used in the present disclosure is water but is not limited thereto.

The heat transfer fluid flows into the second heat-exchanging body 651 through a second inflow hole 652. At this time, the heat transfer fluid receives heat from the exhaust gas flowing through the second heat transfer pipe 655 to be heated.

Thereafter, the heat transfer fluid flows in the circumferential direction along the inside of the second heat-exchanging body 651, then is discharged through a second outflow hole 653 formed at the opposite side thereof, and flows in the direction of the cooling fluid inlet 632 connected with the second outflow hole 653.

Herein, the cooling fluid refers to the heat transfer fluid, but since it is used to cool the CO removal catalyst layer 510, the expression of the cooling fluid is used in combination.

The heat transfer fluid supplied to the cooling fluid inlet 632 cools the CO removal catalyst layer 510 while flowing through the circumferentially disposed cooler 631. Since the heat transfer fluid is water and the steam temperature is about 100°C, heat is taken away from the exothermic reaction of the carbon monoxide selective oxidation reaction in order to keep the suitable reaction temperature of 80 to 160°C of the CO removal catalyst layer 510.

Thereafter, the heat transfer fluid flows out through the cooling fluid outlet 633 disposed at the opposite side of the cooler 631, and at this time, since the cooling fluid outlet 633 is connected with the first inflow hole 614, the heat transfer fluid flows into the first heat transfer pipe 612 through the first inflow hole 614.

The heat transfer fluid is heated by receiving heat from the exhaust gas flowing inside the first heat-exchanging body 611 while flowing inside the first heat transfer pipe 612.

Thereafter, the heat transfer fluid is discharged into the outside through the first outflow hole 615 connected with the first heat transfer pipe 612, mixed with the fuel supplied from the fuel supplying part 230 to become the fuel gas to flow into the apparatus body 200 through the fuel gas inlet 310 again.

Then, the above-described flow of the fuel gas proceeds.

The heat transfer fluid receives heat from the exhaust gas while flowing through the second heat-exchanging body 651 and the first heat transfer pipe 612, except for when being initially supplied from the heat transfer fluid supplying part 220, and receives heat from the CO removal catalyst layer 510 while flowing through the cooler 631, such that most of the states may be kept in the steam state.

As described above, the present disclosure maximally recovers the waste heat of the exhaust gas through the optimal placement and the operating method of various catalyst layers, the heat-exchange, and the cooling portions, and keeps the suitable reaction temperature of various catalyst layers, thereby enhancing the thermal efficiency and the cooling capability of the fuel processing apparatus 100.

The above-described description is only illustrative of the specific embodiments of the fuel processing apparatus.

Therefore, it may be easily understood by those skilled in the art that the substitution and modification of the present disclosure may be made in various forms without departing from the scope of the disclosure as defined in the following claims.

### [Industrial Applicability]

The present disclosure relates to a fuel processing apparatus, and there is an industrial applicability because it corresponds to the technical field applied to a fuel cell system.

## Claims

1. A fuel processing apparatus, comprising:
an apparatus body (200);
a fuel reforming part (300) disposed at the central portion of the apparatus body (200);
a heating part (290) disposed at the upper portion of the apparatus body (200) so as to heat the fuel reforming part (300);
a CO shift-converting reaction part (400) connected with the fuel reforming part (300), and disposed at the lower portion of the apparatus body (200); and
a PROX reaction part (500) connected with the CO shift-converting reaction part (400), and disposed at the upper portion of the apparatus body (200);
wherein the fuel reforming part (300) comprises:
a fuel gas inlet (310) disposed to be connected with the lower end of the apparatus body (200);
a first passage (320) connected with the fuel gas inlet (310), and disposed inside the apparatus body (200) so that the inflow fuel gas is moved upwards;
a reforming catalyst layer (330) connected with the first passage (320), and disposed at the inner central portion of the apparatus body (200); and
a second passage (340) connected with the reforming catalyst layer (330), disposed at the inside of the first passage (320), and provided so that the fuel gas having passed through the reforming catalyst reaction is moved downwards,
wherein the heating part (290) comprises:
a center burner (292) disposed at the upper central portion of the apparatus body (200);
a heat dispersing plate (293) disposed at the upper end of the reforming catalyst layer (330) at the lower portion of the burner;
an exhaust gas passage (297) disposed along the outer circumference of the fuel reforming part (300) inside the apparatus body (200); and
a side burner (294) disposed along the circumference of the center burner (292).

2. The fuel processing apparatus of claim 1,
wherein the CO shift-converting reaction part (400) comprises
a CO shift-converting catalyst layer (410) disposed along the outer circumference of the fuel reforming part (300) at the lower portion of the apparatus body (200);
a third passage (420) disposed at the lower end of the apparatus body (200), and for connecting the second passage (340) with the CO shift-converting catalyst layer (410); and
a fourth passage (430) for connecting the CO shift-converting catalyst layer (410) with the PROX reaction part (500) at the outside of the apparatus body (200), and provided so that the fuel gas having passed through the CO shift-converting catalyst reaction flows to the PROX reaction part (500).

3. The fuel processing apparatus of claim 2,
wherein the PROX reaction part (500) comprises
a CO removal catalyst layer (510) disposed along the outer circumference of the heating part (290) at the upper portion of the apparatus body (200);
a PROX inlet disposed at one side of the CO removal catalyst layer (510), and connected with the fourth passage (430); and
a PROX outlet (530) disposed at the other side of the CO removal catalyst layer (510), and for discharging the fuel gas having passed through the CO removal catalyst reaction.

4. The fuel processing apparatus of claim 1,
wherein the heat dispersing plate (293) has a hemispherical shape protruded toward the center burner (292), and the side burner (294) is disposed to be perpendicular to the surface of the heat dispersing plate (293).

5. The fuel processing apparatus of claim 4, further comprising a first heat-exchanging part (610) connected with the heating part (290), and disposed between the heating part (290) and the CO shift-converting reaction part (400) so as to be heat-exchanged between the exhaust gas discharged from the heating part (290) and the CO shift-converting reaction part (400).

6. The fuel processing apparatus of claim 5,
wherein the first heat-exchanging part (610) comprises
a first heat-exchanging body (611) disposed along the outer circumference of the exhaust gas passage (297), and connected with the exhaust gas passage (297); and
a first heat transfer pipe (612) disposed to be wound in plural along the inner circumference of the first heat-exchanging body (611), and through which heat transfer fluid flows,
wherein heat is exchanged between the exhaust gas flowing through the first heat-exchanging body (611) and the heat transfer fluid flowing through the first heat transfer pipe (612).

7. The fuel processing apparatus of claim 6, further comprising a PROX cooling part (630) disposed along the inner circumference of the PROX reaction part (500) so as to cool the PROX reaction part (500).

8. The fuel processing apparatus of claim 7,
wherein the PROX cooling part (630) comprises
a cooler (631) disposed along the inner circumference of the CO removal catalyst layer (510);
a cooling fluid inlet (632) disposed at one side of the cooler (631), and into which the heat transfer fluid flows; and
a cooling fluid outlet (633) disposed at the other side of the cooler (631), and out which the heat transfer fluid flows.

9. The fuel processing apparatus of claim 8, further comprising a second heat-exchanging part (650) connected between the PROX cooling part (630) and the first heat-exchanging part (610) so as to be heat-exchanged between the exhaust gas and the heat transfer fluid.

10. The fuel processing apparatus of claim 9,
wherein the second heat-exchanging part (650) comprises
a second heat-exchanging body (651) disposed along the outer circumference of the first heat-exchanging body (611), and having an inflow hole (614) into which the heat transfer fluid flows and an outflow hole (615) out which the heat transfer fluid flows; and
a second heat transfer pipe (655) disposed at the second heat-exchanging body (651), connected with the first heat-exchanging body (611), and through which the exhaust gas flows.

11. The fuel processing apparatus of claim 12,
wherein the outflow hole (615) of the second heat-exchanging body (651) is connected with the cooling fluid inlet (632), and the cooling fluid outlet (633) is connected with the fuel gas inlet (310).

## Patentansprüche

1. Eine Kraftstoffverarbeitungsvorrichtung, die folgende Merkmale aufweist:
einen Vorrichtungskörper (200);
ein Kraftstoffreformierungsteil (300), das an dem mittleren Abschnitt des Vorrichtungskörpers (200) angeordnet ist;
ein Erwärmungsteil (290), das an dem oberen Abschnitt des Vorrichtungskörpers (200) angeordnet ist, um das Kraftstoffreformierungsteil (300) zu erwärmen;
ein Katalytische-CO-Konvertierung-Reaktionsteil (400), das mit dem Kraftstoffreformierungsteil (300) verbunden ist und an dem unteren Abschnitt des Vorrichtungskörpers (200) angeordnet ist; und
ein PROX-Reaktionsteil (500), das mit dem Katalytische-CO-Konvertierung-Reaktionsteil (400) verbunden ist und an dem oberen Abschnitt des Vorrichtungskörpers (200) angeordnet ist;
wobei das Kraftstoffreformierungsteil (300) folgende Merkmale aufweist:
einen Kraftstoffgaseinlass (310), der dahingehend angeordnet ist, mit dem unteren Ende des Vorrichtungskörpers (200) verbunden zu sein;
einen ersten Durchgang (320), der mit dem Kraftstoffgaseinlass (310) verbunden ist und innerhalb des Vorrichtungskörpers (200) angeordnet ist, so dass das einströmende Kraftstoffgas nach oben bewegt wird;
eine Reformierungskatalysatorschicht (330), die mit dem erstem Durchgang (320) verbunden ist und an dem inneren mittleren Abschnitt des Vorrichtungskörpers (200) angeordnet ist; und
einen zweiten Durchgang (340), der mit der Reformierungskatalysatorschicht (330) verbunden ist, im Inneren des ersten Durchgangs (320) angeordnet ist und so bereitgestellt ist, dass das Kraftstoffgas, das durch die Reformierungskatalysatorreaktion verlaufen ist, nach oben bewegt wird,
wobei das Erwärmungsteil (290) folgende Merkmale aufweist:
einen Mittelbrenner (292), der an dem oberen mittleren Abschnitt des Vorrichtungskörpers (200) angeordnet ist;
eine Wärmeausbreitungsplatte (293), die an dem oberen Ende der Reformierungskatalysatorschicht (330) an dem unteren Abschnitt des Brenners angeordnet ist;
einen Auslassgasdurchgang (297), der entlang des äußeren Umfangs des Kraftstoffreformierungsteils (300) innerhalb des Vorrichtungskörpers (200) angeordnet ist; und
einen Seitenbrenner (294), der entlang des Umfangs des Mittelbrenners (292) angeordnet ist.

2. Die Kraftstoffverarbeitungsvorrichtung gemäß Anspruch 1,
wobei das Katalytische-CO-Konvertierung-Reaktionsteil (400) Folgendes aufweist:
eine Katalytische-CO-Konvertierung-Katalysatorschicht (410), die entlang des äußeren Umfangs des Kraftstoffreformierungsteils (300) an dem unteren Abschnitt des Vorrichtungskörpers (200) angeordnet ist;
einen dritten Durchgang (420), der an dem unteren Ende des Vorrichtungskörpers (200) angeordnet ist und dazu dient, den zweiten Durchgang (340) mit der Katalytische-CO-Konvertierung-Katalysatorschicht (410) zu verbinden; und
einen vierten Durchgang (430) zum Verbinden der Katalytische-CO-Konvertierung-Katalysatorschicht (410) mit dem PROX-Reaktionsteil (500) an der Außenseite des Vorrichtungskörpers (200), und der so bereitgestellt ist, dass das Kraftstoffgas, das durch die Katalytische-CO-Konvertierung-Katalysatorreaktion verlaufen ist, zu dem PROX-Reaktionsteil (500) strömt.

3. Die Kraftstoffverarbeitungsvorrichtung gemäß Anspruch 2,
wobei das PROX-Reaktionsteil (500) folgende Merkmale aufweist:
eine CO-Entfernungskatalysatorschicht (510), die entlang des äußeren Umfangs des Erwärmungsteils (290) an dem oberen Abschnitt des Vorrichtungskörpers (200) angeordnet ist;
einen PROX-Einlass, der auf einer Seite der CO-Entfernungskatalysatorschicht (510) angeordnet ist und mit dem vierten Durchgang (430) verbunden ist; und
einen PROX-Auslass (530), der auf der anderen Seite der CO-Entfernungskatalysatorschicht (510) angeordnet ist und zum Abgeben des Kraftstoffgases, das durch die CO-Entfernungskatalysatorreaktion verlaufen ist, dient.

4. Die Kraftstoffverarbeitungsvorrichtung gemäß Anspruch 1,
wobei die Wärmeausbreitungsplatte (293) eine Halbkugelform aufweist, die hin zu der Brennermitte (292) hervorsteht, und der Seitenbrenner (294) dahingehend angeordnet ist, senkrecht zu der Oberfläche der Wärmeausbreitungsplatte (293) zu sein.

5. Die Kraftstoffverarbeitungsvorrichtung gemäß Anspruch 4, die ferner ein erstes Wärmetauschteil (610) aufweist, das mit dem Erwärmungsteil (290) verbunden ist und zwischen dem Erwärmungsteil (290) und dem Katalytische-CO-Konvertierung-Reaktionsteil (400) angeordnet ist, um zwischen dem Auslassgas, das aus dem Erwärmungsteil (290) abgeben wird, und dem Katalytische-CO-Konvertierung-Reaktionsteil (400) einen Wärmetausch auszuführen.

6. Die Kraftstoffverarbeitungsvorrichtung gemäß Anspruch 5,
wobei das erste Wärmetauschteil (610) folgende Merkmale aufweist:
einen ersten Wärmetauschkörper (611), der entlang des äußeren Umfangs des Auslassgasdurchgangs (297) angeordnet ist und mit dem Auslassgasdurchgang (297) verbunden ist; und
eine erste Wärmetransferleitung (612), die dazu angeordnet ist, in Mehrzahl entlang des inneren Umfangs des ersten Wärmetauschkörpers (611) gewickelt zu sein, und durch die Wärmetransferfluid strömt,
wobei Wärme zwischen dem Auslassgas, das durch den ersten Wärmetauschkörper (611) fließt, und dem Wärmetransferfluid ausgetauscht wird, das durch die erste Wärmetransferleitung (612) fließt.

7. Die Kraftstoffverarbeitungsvorrichtung gemäß Anspruch 6, die ferner ein PROX-Kühlungsteil (630) aufweist, das entlang des inneren Umfangs des PROX-Reaktionsteils (500) angeordnet ist, um das PROX-Reaktionsteil (500) zu kühlen.

8. Die Kraftstoffverarbeitungsvorrichtung gemäß Anspruch 7,
wobei das PROX-Kühlungsteil (630) Folgendes aufweist:
einen Kühler (631), der entlang des inneren Umfangs der CO-Entfernungskatalysatorschicht (510) angeordnet ist;
ein Kühlfluideinlass (632), der auf einer Seite des Kühlers (631) angeordnet ist und in den das Wärmetransferfluid fließt; und
ein Kühlfluidauslass (633), der auf der anderen Seite des Kühlers (631) angeordnet ist und aus dem das Wärmetransferfluid fließt.

9. Die Kraftstoffverarbeitungsvorrichtung gemäß Anspruch 8, die ferner ein zweites Wärmetauschteil (650) aufweist, das zwischen dem PROX-Kühlungsteil (630) und dem ersten Wärmetauschteil (610) angeordnet ist, um zwischen dem Auslassgas und dem Wärmetransferfluid einen Wärmetausch auszuführen.

10. Die Kraftstoffverarbeitungsvorrichtung gemäß Anspruch 9,
wobei das zweite Wärmetauschteil (650) folgende Merkmale aufweist:
einen zweiten Wärmetauschkörper (651), der entlang des äußeren Umfangs des ersten Wärmetauschkörpers (611) angeordnet ist und ein Einflussloch (614) aufweist, in das das Wärmetransferfluid fließt, und ein Ausflussloch (615), aus dem das Wärmetransferfluid fließt; und
eine zweite Wärmetransferleitung (605), die an dem zweiten Wärmetauschkörper (651) angeordnet ist, mit dem ersten Wärmetauschkörper (611) verbunden ist und durch die das Auslassgas strömt.

11. Die Kraftstoffverarbeitungsvorrichtung gemäß Anspruch 12, wobei
das Ausflussloch (615) des zweiten Wärmetauschkörpers (651) mit dem Kühlfluideinlass (632) verbunden ist, und der Kühlfluidauslass (633) mit den Kraftstoffgaseinlass (310) verbunden ist.

## Revendications

1. Appareil de traitement de carburant, comprenant:
un corps de l'appareil (200);
une partie de reformage de carburant (300) disposée au niveau de la partie centrale du corps de l'appareil (200);
une partie de chauffage (290) disposée au niveau de la partie supérieure du corps de l'appareil (200) de manière à chauffer la partie de reformage de carburant (300);
une partie de réaction de conversion de déplacement de CO (400) connectée à la partie de reformage de carburant (300), et disposée au niveau de la partie inférieure du corps de l'appareil (200); et
une partie de réaction de PROX (500) connectée à la partie de réaction de conversion de déplacement de CO (400), et disposée au niveau de la partie supérieure du corps de l'appareil (200);
dans lequel la partie de reformage de carburant (300) comprend:
une entrée de gaz carburant (310) disposée de manière à être connectée à l'extrémité inférieure du corps de l'appareil (200);
un premier passage (320) connecté à l'entrée de gaz carburant (310), et disposé à l'intérieur du corps de l'appareil (200) de sorte que le gaz carburant entrant soit déplacé vers le haut;
une couche de catalyseur de reformage (330) connectée au premier passage (320), et disposée au niveau de la partie centrale intérieure du corps de l'appareil (200); et
un deuxième passage (340) connecté à la couche de catalyseur de reformage (330), disposé à l'intérieur du premier passage (320), et prévu de sorte que le gaz carburant qui a passé par la réaction de catalyseur de reformage soit déplacé vers le bas,
dans lequel la partie de chauffage (290) comprend:
un brûleur central (292) disposé au niveau de la partie centrale supérieure du corps de l'appareil (200);
une plaque de dispersion de chaleur (293) disposée à l'extrémité supérieure de la couche de catalyseur de reformage (330) au niveau de la partie inférieure du brûleur;
un passage de gaz d'échappement (297) disposé le long de la circonférence extérieure de la partie de reformage de carburant (300) à l'intérieur du corps de l'appareil (200); et
un brûleur latéral (294) disposé le long de la circonférence du brûleur central (292).

2. Appareil de traitement de carburant selon la revendication 1,
dans lequel la partie de réaction de conversion de déplacement de CO (400) comprend
une couche de catalyseur de conversion de déplacement de CO (410) disposée le long de la circonférence extérieure de la partie de reformage de carburant (300) au niveau de la partie inférieure du corps de l'appareil (200);
un troisième passage (420) disposé à l'extrémité inférieure du corps de l'appareil (200), et destiné à connecter le deuxième passage (340) à la couche de catalyseur de conversion de déplacement de CO (410); et
un quatrième passage (430) destiné à connecter la couche de catalyseur de conversion de déplacement de CO (410) avec la partie de réaction de PROX (500) à l'extérieur du corps de l'appareil (200), et prévu de sorte que le gaz carburant qui a passé par la réaction de catalyseur de conversion de déplacement de CO circule vers la partie de réaction de PROX (500).

3. Appareil de traitement de carburant selon la revendication 2,
dans lequel la partie de réaction de PROX (500) comprend
une couche de catalyseur d'élimination de CO (510) disposée le long de la circonférence extérieure de la partie de chauffage (290) au niveau de la partie supérieure du corps de l'appareil (200);
une entrée de PROX disposée d'un côté de la couche de catalyseur d'élimination de CO (510), et connectée au quatrième passage (430); et
une sortie de PROX (530) disposée de l'autre côté de la couche de catalyseur d'élimination de CO (510), et destinée à évacuer le gaz carburant qui a passé par la réaction de catalyseur d'élimination de CO.

4. Appareil de traitement de carburant selon la revendication 1,
dans lequel la plaque de dispersion de chaleur (293) présente une forme hémisphérique ressortant vers le brûleur central (292), et le brûleur latéral (294) est disposé de manière à être perpendiculaire à la surface de la plaque de dispersion de chaleur (293).

5. Appareil de traitement de carburant selon la revendication 4, comprenant par ailleurs une première partie d'échange de chaleur (610) connectée à la partie de chauffage (290), et disposée entre la partie de chauffage (290) et la partie de réaction de conversion de déplacement de CO (400) de manière à être à échange de chaleur entre le gaz d'échappement évacué de la partie de chauffage (290) et de la partie de réaction de conversion de déplacement de CO (400).

6. Appareil de traitement de carburant selon la revendication 5,
dans lequel la première partie d'échange de chaleur (610) comprend
un premier corps d'échange de chaleur (611) disposé le long de la circonférence extérieure du passage de gaz d'échappement (297), et connecté au passage de gaz d'échappement (297); et
un premier tuyau de transfert de chaleur (612) disposé de manière à être enroulé plusieurs fois le long de la circonférence intérieure du premier corps d'échange de chaleur (611), et à travers lequel circule un fluide de transfert de chaleur,
dans lequel de la chaleur est échangée entre les gaz d'échappement circulant à travers le premier corps d'échange de chaleur (611) et le fluide de transfert de chaleur circulant à travers le premier tuyau de transfert de chaleur (612).

7. Appareil de traitement de carburant selon la revendication 6, comprenant par ailleurs une partie de refroidissement de PROX (630) disposée le long de la circonférence intérieure de la partie de réaction de PROX (500) de manière à refroidir la partie de réaction de PROX (500).

8. Appareil de traitement de carburant selon la revendication 7,
dans lequel la partie de refroidissement de PROX (630) comprend
un refroidisseur (631) disposé le long de la circonférence intérieure de la couche de catalyseur d'élimination de CO (510);
une entrée de fluide de refroidissement (632) disposée d'un côté du refroidisseur (631), et vers laquelle circule le fluide de transfert de chaleur; et
une sortie de fluide de refroidissement (633) disposée de l'autre côté du refroidisseur (631), et hors de laquelle circule le fluide de transfert de chaleur.

9. Appareil de traitement de carburant selon la revendication 8, comprenant par ailleurs une deuxième partie d'échange de chaleur (650) connectée entre la partie de refroidissement de PROX (630) et la première partie d'échange de chaleur (610) de manière à être à échange de chaleur entre les gaz d'échappement et le fluide de transfert de chaleur.

10. Appareil de traitement de carburant selon la revendication 9,
dans lequel la deuxième partie d'échange de chaleur (650) comprend
un deuxième corps d'échange de chaleur (651) disposé le long de la circonférence extérieure du premier corps d'échange de chaleur (611), et présentant un trou d'entrée (614) vers lequel circule le fluide de transfert de chaleur et un trou de sortie (615) hors duquel circule le fluide de transfert de chaleur; et
un deuxième tuyau de transfert de chaleur (655) disposé au niveau du deuxième corps d'échange de chaleur (651), connecté au premier corps d'échange de chaleur (611), et à travers lequel circulent les gaz d'échappement.

11. Appareil de traitement de carburant selon la revendication 12,
dans lequel le trou de sortie (615) du deuxième corps d'échange de chaleur (651) est connecté à l'entrée de fluide de refroidissement (632), et la sortie de fluide de refroidissement (633) est connectée à l'entrée de gaz carburant (310).
